# EUROPEAN PATENT APPLICATION

(11) **EP 4 773 572 A1**
(43) Date of publication of application: **08.07.2026**
(21) Application number: 24826851.8
(22) Date of filing: 28.08.2024
(51) Int. Cl.: H04L 65/1016, H04L 65/1083

(54) **IMS MEDIA PLANE SELECTION METHOD AND DEVICE, IMS CORE NETWORK, AND STORAGE MEDIUM**

(30) Priority: 01.09.2023 CN 202311126170
(71) Applicant: China Mobile Group Design Institute Co., Ltd., Beijing 100080 (CN); China Mobile Communications Group Co., Ltd., Beijing 100032 (CN)
(72) Inventor: FENG, Zheng, Beijing 100080 (CN); WU, Qian, Beijing 100080 (CN); LIU, Lei, Beijing 100080 (CN); LIN, Zeyi, Beijing 100080 (CN); XU, Zheng, Beijing 100080 (CN); QIU, Wei, Beijing 100080 (CN); NIU, Xiaodan, Beijing 100080 (CN); ZHAI, Zhenhui, Beijing 100080 (CN); LIU, Chen, Beijing 100080 (CN); WANG, Yang, Beijing 100080 (CN); XU, Chen, Beijing 100080 (CN); ZHU, Mingwei, Beijing 100080 (CN); CHEN, Jingxia, Beijing 100080 (CN); YIN, Fengqing, Beijing 100080 (CN); LI, Xintian, Beijing 100080 (CN)
(74) Representative: Maiwald GmbH
(86) International application number: PCT/CN2024/115298
(87) International publication number: WO 2025/045116

(57) **Abstract**

The disclosure discloses a method and a device for selecting a media plane of IMS, IMS core network and storage medium, and when a terminal is in a calling process or a called process, an association relationship between an IP addresses of a DC media plane and an SBC media plane is constructed in advance, so that after one of the media planes is selected in the IMS core network, the IP address of the other media plane that is set in an integrated manner can be obtained according to the media plane selected first, so that the other media plane corresponding to the IP address is selected. By selecting a DC media plane and an SBC-U which are an integrated network element with strong correlation during the call process of the UE, a media stream forwarding is realized inside the integrated network element without selecting a media plane network element available in the POOL by polling a plurality of times, thereby reducing a media forwarding delay, improving data interaction efficiency. In addition, an audio/video media stream that needs to be anchored can be terminated in the integrated network element, which can effectively reduce requirements of an IP bearer network and transmission resources.

## Description

### CROSS-REFERENCE TO RELATED APPLICATIONS

The disclosure claims priority to Chinese Patent Application No. 202311126170.X, filed on September 11, 2023, the entire contents of which are incorporated herein by reference.

### TECHNICAL FIELD

The disclosure relates to a field of core network, and particularly to a method and a device for selecting a media plane of an Internet Protocol (IP) Multimedia Subsystem (IMS), an IMS core network and a storage medium.

### BACKGROUND

With evolution and development of an IMS technology, on the basis of supporting an audio voice service, a video service and a text service, an enhanced video service capability and a data channel (DC) processing capability are added. According to a current technical standard, for calls using an IMS DC service function, a Voice over NR/Voice over LTE Session Border Controller-User plane (VoNR/VoLTE SBC-U) is first selected for a user call to dredge service flows of a media plane. Then, a Voice over NR/Voice over LTE Application Server (VoNR/VoLTE AS) of the IMS selects a DC media plane network element for a current call. The VoNR/VoLTE AS instructs a VoNR/VoLTE Session Border Controller-Control plane (SBC-C) to anchor a media plane of the call from the VoNR/VoLTE SBC-U to a selected DC media plane network element, and sends an address of the selected DC media plane network element to a DC control plane network element. Subsequently, the DC control plane network element controls the DC media plane network element to complete relevant media service processing.

In traditional methods for selecting a media plane, the VoNR/VoLTE AS selects a DC media plane network element based on area code location information in a P-Access-Network-Info (PANI) header without address information of a VoNR/VoLTE SBC-U of the current call. Therefore, any node in a POOL of DC media planes of an area/province corresponding to the area code location information can be selected by polling in a load sharing manner. As a result, an available media plane network element in the POOL needs to be selected by polling a plurality of times, a media stream cannot be processed nearby, causing a large amount of media traffic to detour across devices or even detour across cities, increasing a media forwarding delay, affecting user experience, and occupying additional transmission bandwidth resources.

### SUMMARY

An objective of embodiments of the disclosure is to provide a method and a device for selecting a media plane of an IMS, an IMS core network and a storage medium, so that a media stream forwarding is realized inside an integrated network element with selecting a media plane network element available in a POOL by polling a plurality of times, and a media stream can be processed nearby, thereby reducing a media forwarding delay, improving data interaction efficiency, and improving user experience. In addition, an audio/video media stream that needs to be anchored can be terminated in an integrated network element, which can effectively reduce requirements of an IP bearer network and transmission resources, and does not occupy additional transmission bandwidth resources.

To achieve the above objective, the embodiments of the disclosure provide a method for selecting a media plane of an IMS, including:
selecting an SBC-U for a current session, and adding identification information of a DC media plane to a PANI header of a call request message, so that an application server obtains an IP address of the DC media plane based on the identification information, in which the identification information is the IP address of the DC media plane or a network element identifier of the DC media plane, and the IP address of the DC media plane is associated with an IP address of the SBC-U in advance;
receiving the IP address of the DC media plane sent by the application server; and
sending the IP address of the DC media plane to the SBC-U, and instructing the SBC-U to anchor a media stream of the current session to the DC media plane.

In an embodiment, adding the identification information to the PANI header includes one of:
adding an extended parameter of the identification information of the DC media plane to the PANI header; or
adding the identification information of the DC media plane to a specific field of the PANI header.

In an embodiment, in which adding the extended parameter of the identification information of the DC media plane to the PANI header includes:
adding an extended parameter of the network element identifier of the DC media plane and an extended parameter of a location identifier to the PANI header; or
adding an extended parameter of the IP address of the DC media plane and an extended parameter of an IP address type to the PANI header.

In an embodiment, adding the identification information of the DC media plane to the specific field of the PANI header includes:
adding the IP address of the DC media plane and an IP address type to the specific field of the PANI header; or
adding the network element identifier of the DC media plane to the specific field of the PANI header.

In an embodiment, the specific field is an sbc-domain field.

In an embodiment, after adding the identification information of the DC media plane to the PANI header of the call request message, the method further includes:
sending the call request message to a Call Session Control Function system (CSCF), so that the CSCF triggers the application server based on user subscription information.

To achieve the above objective, the embodiments of the disclosure provide another method for selecting a media plane of an IMS, including:
selecting a DC media plane for a current session, adding identification information of the DC media plane to a PANI header of a call request message, so that an SBC-C extracts the identification information from the call request message and obtains an IP address of the DC media plane based on the identification information;
in which the identification information is the IP address of the DC media plane or a network element identifier of the DC media plane, and the IP address of the DC media plane is associated with an IP address of the SBC-U in advance, and the SBC-C selects a corresponding SBC-U according to the IP address of the DC media plane.

In an embodiment, adding the identification information to the PANI header includes one of:
adding an extended parameter of the identification information of the DC media plane to the PANI header; or
adding the identification information of the DC media plane to a specific field of the PANI header.

In an embodiment, adding the extended parameter of the identification information of the DC media plane to the PANI header includes:
adding an extended parameter of the network element identifier of the DC media plane and an extended parameter of a location identifier to the PANI header; or
adding an extended parameter of the IP address of the DC media plane and an extended parameter of an IP address type to the PANI header.

In an embodiment, adding the identification information of the DC media plane to the specific field of the PANI header includes:
adding the IP address of the DC media plane and an IP address type to the specific field of the PANI header; or
adding the network element identifier of the DC media plane to the specific field of the PANI header.

In an embodiment, the specific field is an sbc-domain field.

In an embodiment, after adding the identification information of the DC media plane to the PANI header of the call request message, the method further includes:
sending the call request message to a CSCF, so that the CSCF informs the SBC-C to establish a dedicated bearer and informs the SBC-C that the PANI header of the call request message is added with the identification information.

To achieve the above objective, the embodiments of the disclosure provide a method for selecting a media plane of an IMS, including:
selecting an SBC-U for a current session, and obtaining identification information of a DC media plane corresponding to an IP address of the SBC-U after receiving a query message sent by an application server, so that the application server obtains an IP address of the DC media plane based on the identification information, in which the identification information is the IP address of the DC media plane or a network element identifier of the DC media plane, and the IP address of the DC media plane is associated with the IP address of the SBC-U in advance;
receiving the IP address of the DC media plane sent by the application server; and
sending the IP address of the DC media plane to the SBC-U, and instructing the SBC-U to anchor a media stream of the current session to the DC media plane.

In an embodiment, after selecting the SBC-U for the current session, the method further includes:
mapping user location information and filling in an sbc-domain field of a PANI header of the call request message with mapped location information, and sending the call request message to a CSCF, so that the CSCF triggers the application server based on user subscription information.

To achieve the above objective, the embodiments of the disclosure provide an IMS core network, including an SBC-C and an application server, in which,
the SBC-C selects an SBC-U for a current session, and adds identification information of a DC media plane to a PANI header of a call request message, in which the identification information is an IP address of the DC media plane or a network element identifier of the DC media plane, and the IP address of the DC media plane is associated with an IP address of the SBC-U in advance;
the application server obtains the IP address of the DC media plane based on the identification information, and returns the IP address of the DC media plane to the SBC-C; and
the SBC-C sends the IP address of the DC media plane to the SBC-U, and instructs the SBC-U to anchor a media stream of the current session to the DC media plane.

To achieve the above objective, the embodiments of the disclosure provide an IMS core network, including an SBC-C and an application server, in which,
the application server selects a DC media plane for a current session, and adds identification information of the DC media plane to a PANI header of a call request message, in which the identification information is an IP address of the DC media plane or a network element identifier of the DC media plane, and the IP address of the DC media plane is associated with an IP address of the SBC-U in advance;
the SBC-C extracts the identification information from the call request message, and obtains the IP address of the DC media plane based on the identification information; and
the SBC-C indexes to a corresponding IP address of the SBC-U according to the IP address of the DC media plane, and selects a corresponding SBC-U according to the IP address of the SBC-U.

To achieve the above objective, the embodiments of the disclosure provide an IMS core network, including an SBC-C and an application server, in which,
the SBC-C selects an SBC-U for a current session, and obtaining identification information of a DC media plane corresponding to an IP address of the SBC-U after receiving a query message sent by an application server, in which the identification information is an IP address of the DC media plane or a network element identifier of the DC media plane, and the IP address of the DC media plane is associated with the IP address of the SBC-U in advance;
the application server obtains the IP address of the DC media plane based on the identification information, and returns the IP address of the DC media plane to the SBC-C; and
the SBC-C sends the IP address of the DC media plane to the SBC-U, and instructs the SBC-U to anchor a media stream of a current session to the DC media plane.

To achieve the above objective, the embodiments of the disclosure provide a device for selecting a media plane of an IMS, including a processor, a memory and a computer program stored in the memory and executed by the processor, in which when the computer program is executed by the processor, the method of any one of above embodiments is implemented.

To achieve the above objective, the embodiments of the disclosure provide a computer-readable storage medium, including a stored computer program, in which when the computer program is running, a device where the computer-readable storage medium is located implements the method of any one of above embodiments.

Compared with the related art, a method and a device for selecting a media plane of an IMS, an IMS core network and a storage medium are provided in the disclosure. An association relationship between an IP address of a DC media plane and an IP address of an SBC-U is constructed in advance when the terminal is in a calling process or a called process. After selecting one of media planes in an IMS core network, an IP address of the other media plane that is set in an integrated manner can be obtained according to a media plane selected first, so that the other corresponding media plane is selected based on the IP address. By selecting a DC media plane network element and an SBC-U network element which are an integrated network element with strong correlation during a call process of the user, a media stream forwarding is realized inside the integrated network element without selecting a media plane network element available in a POOL by polling a plurality of times, and a media stream can be processed nearby, thereby reducing a media forwarding delay, improving data interaction efficiency, and improving user experience. In addition, an audio/video media stream that needs to be anchored can be terminated in the integrated network element, which can effectively reduce requirements of an IP bearer network and transmission resource, and does not occupy additional transmission bandwidth resources.

### BRIEF DESCRIPTION OF THE DRAWINGS

FIG. 1 is a flowchart of a first method for selecting a media plane of an IMS according to embodiments of the disclosure.
FIG. 2 is a flowchart of a calling process between a User Equipment (UE) and an IMS core network according to embodiments of the disclosure.
FIG. 3 is a flowchart of a called process between a UE and an IMS core network based on a video enhancement service according to embodiments of the disclosure.
FIG. 4 is a flowchart of a second method for selecting a media plane of an IMS according to embodiments of the disclosure.
FIG. 5 is a flowchart of a called process between a UE and an IMS core network based on a DC service according to embodiments of the disclosure.
FIG. 6 is a flowchart of a third method for selecting a media plane of an IMS according to embodiments of the disclosure.
FIG. 7 is a flowchart of another calling process between a UE and an IMS core network according to embodiments of the disclosure.
FIG. 8 is a flowchart of another called process between a UE and an IMS core network based on a video enhancement service according to embodiments of the disclosure.
FIG. 9 is a block diagram of a device for selecting a media plane of an IMS according to embodiments of the disclosure.

### DETAILED DESCRIPTION

Technical solutions in embodiments of the disclosure are clearly and completely described in combination with drawings in the embodiments of the disclosure. Obviously, the described embodiments are only part of the embodiments of the disclosure, not all of the embodiments. Based on the embodiments in the disclosure, all other embodiments obtained by those skilled in the art without creative work belong to the protection scope of the disclosure.

In the embodiments of the disclosure, considering an application scenario when the terminal is used as a calling end or a called end, and considering different service scenarios in each calling application scenario and each called application scenario, service scenarios are divided into a video enhancement service scenario and a DC service scenario, and since information interaction processes between a terminal and an IMS core network in calling scenarios of the video enhancement service and the data channel service are the same, a process of a calling end of the video enhancement service and a process of a calling end of the DC service fall in the same application scenario. Therefore, three application scenarios need to be considered in the disclosure: ① an information interaction scenario between the calling end and the IMS core network, ② an information interaction scenario between the called end and the IMS core network in the video enhancement service, and ③ an information interaction scenario between the called end and the IMS core network in the DC service.

The IMS core network in the embodiments of the disclosure is provided with several functional modules, which are:
P-CSCF/VoNR/VoLTE SBC-C: collectively referred to as VoNR/VoLTE SBC-C in the embodiments of the disclosure, meaning a Session Border Controller-Control plane, in which: CSCF is short for Call Session Control Function; VoNR is short for Voice over NR and represents a 5th Generation (5G) voice solution; VoLTE is short for Voice over LTE and represents a 4th Generation (4G) voice solution; SBC is short for Session Border Controller; a control plane is a channel through which two nodes communicate to exchange information. For example, there is data to be transmitted between a base station and a terminal, a data transmission channel should be established, what encoding mode is to be used, what kind of packet is to be transmitted, when to start a transmission, and the like are negotiated. All these are functions of a control plane, and the control plane serves a media plane;
VoNR/VoLTE SBC-U: Session Border Controller-User plane. The User plane which is also referred to as a media plane is a channel for transmitting specific data;
DC media plane;
PCF/PCRF: PCF is short for Policy Control Function; and PCRF is short for Policy Charging and Rules Function;
I/S-CSCF: Interrogating/Serving-Call Session Control Function;
VoNR/VoLTE AS: AS is short for application server;
DNS: Domain Name System;
DC control plane.

HSS/DUM: HSS is short for Home Subscriber Server; and UDM is short for Unified Data Management.

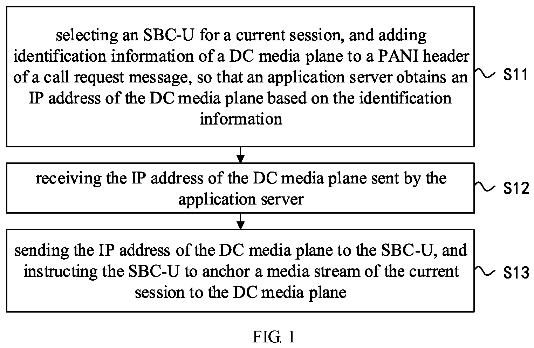

FIG. 1 is a flowchart of a first method for selecting a media plane of an IMS according to embodiments of the disclosure. The method for selecting a media plane of the IMS is applicable to an IMS core network and is applied in the above scenario ① and scenario ②. The method includes steps S11, S12, and S13.

At step S11, an SBC-U is selected for a current session, and identification information of a DC media plane is added to a PANI header of a call request message, so that an application server obtains an IP address of the DC media plane based on the identification information.

At step S12, the IP address of the DC media plane sent by the application server is received.

At step S13, the IP address of the DC media plane is sent to the SBC-U, and the SBC-U is instructed to anchor a media stream of the current session to the DC media plane.

It should be noted that the method for selecting a media plane of the IMS in the embodiments of the disclosure is implemented by a VoNR/VoLTE SBC-C in the IMS core network. The identification information is the IP address of the DC media plane or a network element identifier of the DC media plane, and the IP address of the DC media plane is associated with an IP address of the SBC-U in advance.

Exemplarily, at step S11, VoNR/VoLTE SBC-C fills in a PANI header of a call request INVITE message with the identification information of the DC media plane integrated with a selected VoNR/VoLTE SBC-U by means of extending parameters. At step S12, a VoNR/VoLTE AS directly obtains the identification information of the DC media plane in the PANI header, and obtains the IP address of the DC media plane based on the identification information. The VoNR/VoLTE AS sends an address of a selected DC media plane network element to the VoNR/VoLTE SBC-C. At step S13, the VoNR/VoLTE SBC-C sends an obtained address of the DC media plane network element to the selected VoNR/VoLTE SBC-U, and instructs the VoNR/VoLTE SBC-U to anchor the media stream of a current call to the DC media plane.

In the embodiments of the disclosure, by associating the IP address of the DC media plane with an IP address of VoNR/VoLTE SBC-U in advance, for a call using a 5G new calling service function, a service flow of the media plane should pass through the DC media plane and the VoNR/VoLTE SBC-U network element. Therefore, when a media plane of the IMS is selected subsequently, it can be ensured that the VoNR/VoLTE SBC-U network element and the DC media plane network element required for the same call are strongly correlated media plane network elements, and there is no need to select a DC media plane network element available in a POOL by polling a plurality of times. After selecting the VoNR/VoLTE SBC-U, the DC media plane that is integrated with the VoNR/VoLTE SBC-U can be quickly obtained according to an association relationship, thereby reducing a media forwarding delay, and improving data interaction efficiency. In addition, an audio/video media stream that needs to be anchored can be terminated in an integrated network element, which can effectively reduce requirements of an IP bearer network and transmission resources.

Specifically, adding the identification information to the PANI header includes one of:
adding an extended parameter of the identification information of the DC media plane to the PANI header; or
adding the identification information of the DC media plane to a specific field of the PANI header.

Exemplarily, the PANI header indicates an access network technology, and PANI includes location information where a calling user initiates a call. Adding the extended parameter of the identification information of the DC media plane to the PANI header includes: adding an extended parameter of the network element identifier of the DC media plane and an extended parameter of a location identifier to the PANI header; or adding an extended parameter of the IP address of the DC media plane and an extended parameter of an IP address type to the PANI header. Adding the identification information of the DC media plane to the specific field of the PANI header includes: adding the IP address of the DC media plane and an IP address type to the specific field of the PANI header; or adding the network element identifier of the DC media plane to the specific field of the PANI header. The specific field is an sbc-domain field.

In the embodiments of the disclosure, the network element information of the DC media plane integrated with the VoNR/VoLTE SBC-U is added by extending parameters of the PANI header. When the DC media plane needs to be selected, the VoNR/VoLTE AS can select an appropriate DC media plane by parsing network element information of the DC media plane in the PANI header. There are four ways to extend the parameters of the PANI header:
(1) adding the extended parameter of the network element identifier of the DC media plane and the extended parameter of the location identifier to the PANI header, for example, adding "umf=umf(1..n).<location identifier>.chinamobile.com", in which umf (1..n) is the network element identifier (device identifier) of the DC media plane, umf is short for an English name of the DC media plane, and the location identifier may be an abbreviation of a name of a province, a name of a local network, and a name of an area. In this way, the PANI includes:
   access-type/access-class=3GPP-E-UTRAN-TDD/3GPP-E-UTRAN;
   utran-cell-id-3gpp=<MCC>+<MNC>+<TAC>+<ECI>;
   sbc-domain=sbc(1..n).<long-distance area code>.<area identification code>.<abbreviation of a name of a province>.chinamobile.com;
   umf=umf(1..n).<location identifier>.chinamobile.com.
(2) adding the extended parameter of the IP address of the DC media plane and the extended parameter of the IP address type to the PANI header, for example, adding "umf=<IP address type>.<IP address 1>.<IP address type>.<IP address 2>", and the PANI includes:
   access-type/access-class=3GPP-E-UTRAN-TDD/3GPP-E-UTRAN;
   utran-cell-id-3gpp=<MCC>+<MNC>+<TAC>+<ECI>;
   sbc-domain=sbc(1..n).<long-distance area code>.<area identification code>.<abbreviation of a name of a province>.chinamobile.com;
   umf=<IP address type>.<IP address 1>.<IP address type>.<IP address 2>.
(3) adding the IP address of the DC media plane and the IP address type to the sbc-domain field of the PANI header, for example, adding "<IP address type>.<IP address 1>.<IP address type>.<IP address 2>", and then sbc-domain=sbc(1..n).<IP address type>.<IP address 1>.<IP address type>.<IP address 2>.<long-distance area code>.<area identification code>.<abbreviation of a name of a province>.chinamobile.com.
(4) adding the network element identifier of the DC media plane to the sbc-domain field of the specific field of the PANI header, for example, adding "umf(1..n)", and then sbc-domain=sbc(1..n).umf(1...n).<long-distance area code>.<area identification code>.<abbreviation of a name of a province>.chinamobile.com.

Specifically, when the identification information is the network element identifier, the application server obtains the IP address of the DC media plane based on the identification information, including: sending, by the application server, an IP address resolution request to a DNS based on the network element identifier and receiving the IP address of the DC media plane returned by the DNS.

Exemplarily, the DNS is a core service of the Internet, including a parser and a domain name server. The DNS is a distributed database that maps domain names and IP addresses to each other. In this case, if an extended parameter of the PANI header is the network element identifier, the VoNR/VoLTE AS needs to send an IP address resolution request to the DNS and receives a returned IP address of the DC media plane network element.

Specifically, after the SBC-C adds the identification information of the DC media plane to the PANI header of the call request message, the method further includes: sending the call request message to a CSCF, so that the CSCF triggers the application server based on user subscription information.

Exemplarily, through the above four ways to extend the parameters, the VoNR/VoLTE SBC-C fills in the PANI header of the call request INVITE message with the identification information of the DC media plane that is integrated with the selected VoNR/VoLTE SBC-U, and a Session Initiation Protocol (SIP) call request message is routed to an S-CSCF. The S-CSCF routes the call to the VoNR/VoLTE AS based on a Shared Initial Filter Criteria set (SiFC) of the user, triggers a Service Centralization Continuity Application Server (SCC AS) and a Telephony Application Server (TAS) in order, and completes a service process and number regulation based on a voice service subscribed by the user.

Specifically, the SBC-C instructs the SBC-U to anchor the media stream of the current session to the DC media plane, the method further includes: receiving, by the DC media plane, the IP address of the SBC-U and establishing, by DC media plane, an IP channel with the SBC-U.

Exemplarily, the VoNR/VoLTE SBC-C returns the address of the VoNR/VoLTE SBC-U to the VoNR/VoLTE AS, and the VoNR/VoLTE AS provides relevant information such as the address of the VoNR/VoLTE SBC-U to the DC media plane network element for the DC media plane network element to establish the IP channel with the VoNR/VoLTE SBC-U.

In the embodiments of the disclosure, the VoNR/VoLTE SBC-U is integrated with the DC media plane network element. When a signaling for establishing a media plane IP channel between the VoNR/VoLTE SBC-U and the DC media plane network element is received by the VoNR/VoLTE SBC-U or the DC media plane network element, an Mb interface is regarded as an internal interface processing inside a device, which can reduce an IP forwarding of a media plane once.

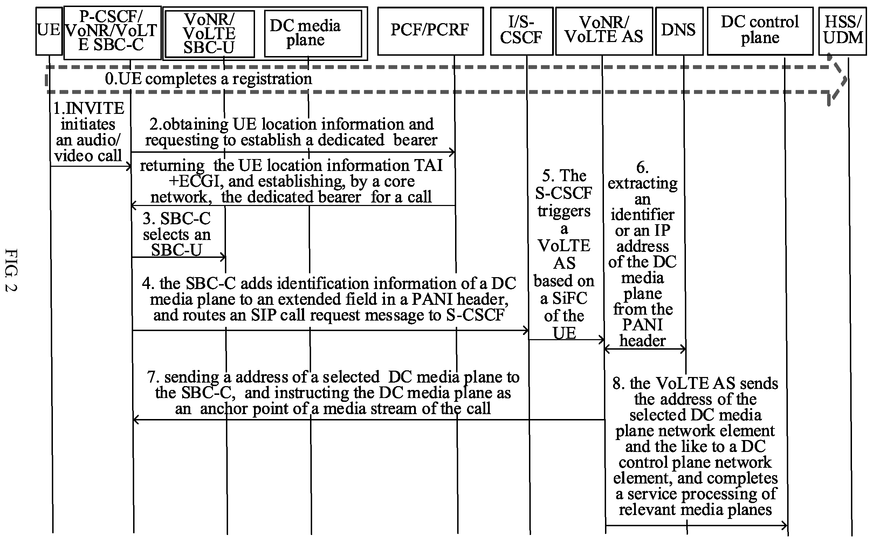

When the method for selecting a media plane of the IMS is applied to the above scenario ①, referring to FIG. 2. FIG. 2 is a flowchart of a calling process between a UE and an IMS core network according to embodiments of the disclosure. The specific process is as follows.

Step 0: The UE accesses a packet domain to complete a registration. SMF/PGW-C (SMF is short for Session Management Function, and PGW-C is a network element corresponding to the SMF) returns an address of a VoNR/VoLTE SBC-C to the UE. The UE sends the VoNR/VoLTE SBC-C to a registration request message of the IMS, establishes and activates a Protocol Data Unit (PDU) session/bearer of an IMS Data Network Name (IMS DNN)/IMS Access Point Name (IMS APN) to complete an IMS registration. After an authentication is passed, the S-CSCF obtains subscriber subscription information from an HSS/UDM. The subscriber subscription information includes a SiFC, and the UE completes an authentication, an IMS core network registration, and an IMS third-party registration on an IMS network.

Step 1: The UE initiates an audio/video call, and an INVITE request is sent to a P-CSCF/VoNR/VoLTE SBC-C (hereinafter referred to as VoNR/VoLTE SBC-C). The INVITE request is used to invite another UE or a server to participate in a session.

Step 2: The VoNR/VoLTE SBC-C sends a message to a PCF/PCRF to request user location information and request to establish a dedicated PDU session/bearer for a voice service. The PCF/PCRF completes information interaction with a network element of a 4/5G core network, and returns current user location information including Tracking Area Identity (TAI) + E-UTRAN Cell Global Identifier (ECGI) to the VoNR/VoLTE SBC-C, and the 4/5G core network establishes the dedicated PDU session/bearer for an audio/video service for a call.

Step 3: The VoNR/VoLTE SBC-C selects a VoNR/VoLTE SBC-U and saves device information (such as an IP address, a Fully Qualified Domain Name (FQDN), and the like.) of the VoNR/VoLTE SBC-U.

Step 4: The VoNR/VoLTE SBC-C, through the above four ways to extend parameters, fills in a PANI header of a call request INVITE message with identification information of a DC media plane that is integrated with a selected VoNR/VoLTE SBC-U, and routes an SIP call request message to an S-CSCF. If the selected VoNR/VoLTE SBC-U is not integrated with the DC media plane, a corresponding field displays None (for example).

Step 5: The S-CSCF routes the call to the VoNR/VoLTE AS based on the SiFC of the UE, triggers an SCC AS and a TAS in order, and completes a service process and number regulation based on the voice service subscribed by the UE.

Step 6: The VoNR/VoLTE AS directly obtains the identification information of the DC media plane in the PANI header, including an IP address of the DC media plane or a network element identifier, and the like. If an extended parameter is the network element identifier, an IP address resolution request is needed to be sent to a DNS, and a returned IP address of the DC media plane network element is received.

It should be noted that if an extended field is None (for example), it indicates that the VoNR/VoLTE SBC-U is not integrated with a DC media plane, the VoNR/VoLTE AS performs a DNS query based on a correspondence between location information such as the area code in the sbc-domain and a DC media plane network element, and selects a DC media plane by polling.

Step 7: The VoNR/VoLTE AS sends an address of a selected DC media plane network element to the VoNR/VoLTE SBC-C. The VoNR/VoLTE SBC-C sends an obtained address of the DC media plane network element to the selected VoNR/VoLTE SBC-U, and instructs the VoNR/VoLTE SBC-U to anchor a media stream of a current call to the DC media plane network element. Then, the VoNR/VoLTE SBC-C returns an address of the VoNR/VoLTE SBC-U to the VoNR/VoLTE AS, and the VoNR/VoLTE AS provides relevant information such as the address of the VoNR/VoLTE SBC-U to the DC media plane network element for the DC media plane network element to establish an IP channel with the VoNR/VoLTE SBC-U.

Step 8: After the DC media plane is successfully anchored, the VoNR/VoLTE AS reports resources of the DC media plane to a DC control plane network element, and then the DC control plane network element directly operates the DC media plane to complete a service processing of relevant media planes.

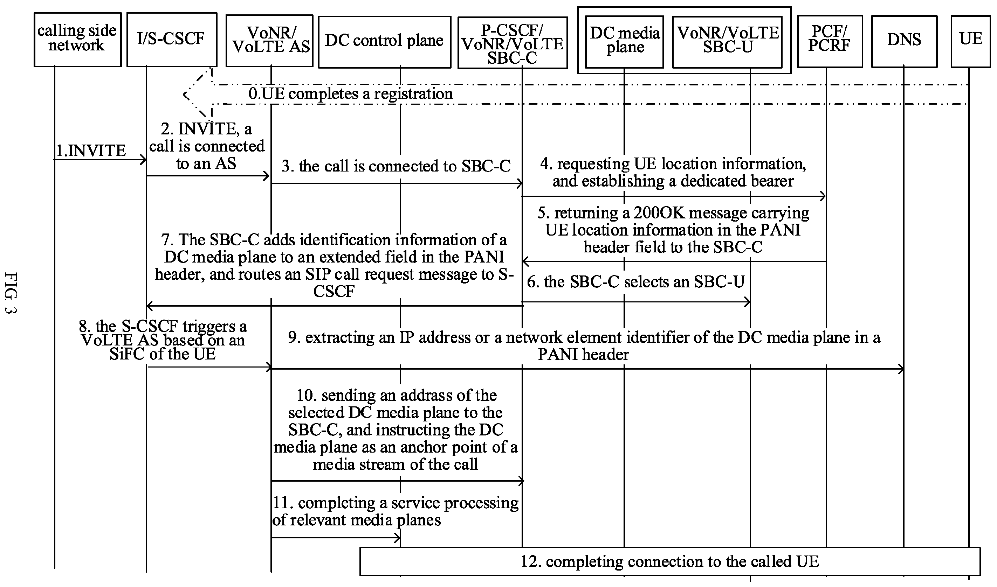

When the method for selecting a media plane of the IMS is applied to the above scenario (2), in a called process solution, the video enhancement solution does not involve a negotiation and establishment of a DC before a callee rings, and is basically consistent with a calling process solution, as illustrated in FIG. 3. FIG. 3 is a flowchart of a called process between a UE and an IMS core network based on a video enhancement service according to embodiments of the disclosure. The specific process is as follows.

Step 0 is the same as step 0 of the calling process in the above method for selecting a media plane of the IMS, and will not be repeated here.

Steps 1~3: A caller initiates an audio/video call, an S-CSCF of the caller connects a call to an I-CSCF of a home province of a callee. The I-CSCF of the callee queries an HSS/UDM and connects the call to a VoNR/VoLTE AS via an S-CSCF currently registered by the caller, and the callee is connected through a VoNR/VoLTE SBC-C of the callee.

Steps 4~5: The VoNR/VoLTE SBC-C sends a message to a PCF/PCRF to request user location information and request to establish a dedicated PDU session/bearer for a voice service. The PCF/PCRF completes information interaction with a network element of a 4/5G core network, carries current user location information TAI + ECGI in a PANI header of a 200OK response message, and returns it to the VoNR/VoLTE SBC-C. The 4/5G core network establishes the dedicated PDU session/bearer for an audio/video service for the call.

Step 6: The VoNR/VoLTE SBC-C selects a VoNR/VoLTE SBC-U and saves device information (such as an IP address, a FQDN, and the like.) of the VoNR/VoLTE SBC-U.

Step 7: The VoNR/VoLTE SBC-C, through the above four ways to extend parameters, fills in a PANI header of a call request INVITE message with identification information of a DC media plane that is integrated with a selected VoNR/VoLTE SBC-U, and routes an SIP call request message to an S-CSCF.

Step 8: The S-CSCF routes the call to the VoNR/VoLTE AS based on a SiFC of the UE, triggers an SCC AS and a TAS in order, and completes a service process and number regulation based on the voice service subscribed by the UE.

Step 9: The VoNR/VoLTE AS directly obtains the identification information of the DC media plane in the PANI header, including the IP address of the DC media plane or a network element identifier, and the like. If an extended parameter is the network element identifier, an IP address resolution request is needed to be sent to a DNS, and a returned IP address of the DC media plane network element is received.

Step 10: The VoNR/VoLTE AS sends an address of a selected DC media plane network element to the VoNR/VoLTE SBC-C. The VoNR/VoLTE SBC-C sends the address of an obtained DC media plane network element to the selected VoNR/VoLTE SBC-U, and instructs the VoNR/VoLTE SBC-U to anchor a media stream of a current call to the DC media plane network element. Then, the VoNR/VoLTE SBC-C returns an address of the VoNR/VoLTE SBC-U to the VoNR/VoLTE AS, and the VoNR/VoLTE AS provides the relevant information such as the address of the VoNR/VoLTE SBC-U to the DC media plane network element for the DC media plane network element to establish an IP channel with the VoNR/VoLTE SBC-U.

Step 11: After the DC media plane is successfully anchored, the VoNR/VoLTE AS reports resources of the DC media plane to a DC control plane network element, and then the DC control plane network element directly operates the DC media plane to complete a service processing of relevant media planes.

In the embodiments of the disclosure, an association relationship between an IP address of a DC media plane and an IP address of an SBC-U is constructed in advance when a terminal is in a calling process or a called process. After selecting one of media planes in an IMS core network, an IP address of the other media plane that is set in an integrated manner can be obtained according to a media plane selected first, so that the other corresponding media plane is selected based on the IP address. By selecting a DC media plane network element and an SBC-U network element which are an integrated network element with strong correlation during the call process of the UE, a media stream forwarding is realized inside the integrated network element without selecting a media plane network element available in a POOL by polling a plurality of times, and a media stream can be processed nearby. After selecting a VoNR/VoLTE SBC-U, a DC media plane that is integrated with the VoNR/VoLTE SBC-U can be quickly obtained according to the association relationship, thereby reducing a media forwarding delay, improving data interaction efficiency, and improving user experience. In addition, an audio/video media stream that needs to be anchored can be terminated in an integrated network element, which can effectively reduce requirements of an IP bearer network and transmission resources, and does not occupy additional transmission bandwidth resources.

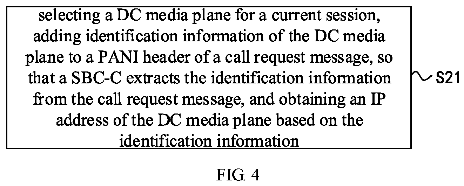

Referring to FIG.4, FIG. 4 is a flowchart of a second method for selecting a media plane of an IMS according to embodiments of the disclosure. The method for selecting a media plane of the IMS is applicable to an IMS core network and is applied in the scenario (3). In a called process based on a DC solution, a DC needs to be established before a callee rings. In this case, the INVITE does not include location information of the callee. To select the DC media plane based on an area code, the called network needs to query a UE location from an HSS/UDM, and map it to an area code. The DC media plane network element queries the location information of the callee from HSS/UDM, maps it to an area code, and carries the area code in a call event control message to a VoNR/VoLTE AS, so that the VoNR/VoLTE AS selects the DC media plane based on the area code. The method for selecting a media plane of the IMS includes step S21.

At step S21, a DC media plane is selected for a current session, identification information of the DC media plane is added to a PANI header of a call request message, so that an SBC-C extracts the identification information from the call request message, and obtains an IP address of the DC media plane based on the identification information.

It should be noted that the method for selecting a media plane of the IMS in the embodiments of the disclosure is implemented by a VoNR/VoLTE AS in the IMS core network. The identification information is the IP address of the DC media plane or a network element identifier of the DC media plane, and the IP address of the DC media plane is associated with an IP address of the SBC-U in advance, and the SBC-C selects a corresponding SBC-U according to the IP address of the DC media plane.

The detailed process of step S21 includes steps S201, S202, and S203.

At step S201, an application server selects the DC media plane for the current session and adds the identification information of the DC media plane to the PANI header of the call request message.

At step S202, the SBC-C extracts the identification information from the call request message, and obtains the IP address of the DC media plane based on the identification information.

At step S203, the SBC-C indexes to a corresponding IP address of the SBC-U according to the IP address of the DC media plane, and selects a corresponding SBC-U according to the IP address of the SBC-U.

Exemplarily, at step S201, a VoNR/VoLTE AS of the callee selects a DC media plane of the callee based on location information such as an area code and fills in a PANI header of a call request INVITE message with the identification information of the DC media plane by extending parameters. At step S202, a VoNR/VoLTE SBC-C of the callee extracts the identification information of the DC media plane from the PANI header and obtains the IP address of the DC media plane based on the identification information. At step S203, the VoNR/VoLTE SBC-C of the callee indexes to a corresponding IP address of a VoNR/VoLTE SBC-U of the callee according to the IP address of the DC media plane, and selects a corresponding VoNR/VoLTE SBC-U of the callee according to the IP address of the VoNR/VoLTE SBC-U of the callee. Then the VoNR/VoLTE SBC-U that is integrated with the DC media plane is selected, a UDP forwarding is performed for the DC media plane and a dedicated bearer for an audio/video and the DC media plane are established.

In the embodiments of the disclosure, an association relationship the IP address of the DC media plane with the IP address of the VoNR/VoLTE SBC-U is constructed in advance, for a call using a 5G new calling service function, a service flow of the media plane should pass through the DC media plane and the VoNR/VoLTE SBC-U network element. Therefore, when a media plane of the IMS is selected subsequently, the VoNR/VoLTE SBC-U network element and the DC media plane network element required for the same call are strongly correlated media plane network elements, and there is no need to select a DC media plane network element available in the POOL by polling a plurality of times. After selecting a DC media plane, the VoNR/VoLTE SBC-U that is integrated with the DC media plane can be quickly obtained according to the association relationship, thereby reducing a media forwarding delay, and improving data interaction efficiency. In addition, an audio/video media stream that needs to be anchored can be terminated in an integrated network element, which can effectively reduce requirements of an IP bearer network and transmission resources.

Specifically, adding the identification information of the DC media plane to the PANI header includes one of:
adding an extended parameter of the identification information of the DC media plane to the PANI header; or
adding the identification information of the DC media plane to a specific field of the PANI header.

Exemplarily, the PANI header indicates an access network technology, and PANI includes location information where a caller initiated a call. Adding the extended parameter of the identification information of the DC media plane to the PANI header includes: adding an extended parameter of the network element identifier of the DC media plane and an extended parameter of a location identifier to the PANI header; or adding an extended parameter of the IP address of the DC media plane and an extended parameter of an IP address type to the PANI header. Adding the identification information of the DC media plane to the specific field of the PANI header includes: adding the IP address of the DC media plane and an IP address type to the specific field of the PANI header; or adding the network element identifier of the DC media plane to the specific field of the PANI header. The specific field is an sbc-domain field.

The way to expand parameters of the PANI header in the embodiments of the disclosure can refer to the example in the first method for selecting a media plane of the IMS, and will not be repeated here.

Specifically, when the identification information is a network element identifier, the application server obtains the IP address of the DC media plane based on the identification information, including: sending, by the application server, an IP address resolution request to a DNS based on the network element identifier and receiving the IP address of the DC media plane returned by the DNS.

Exemplarily, the DNS is a core service of the Internet, including a parser and a domain name server. The DNS is a distributed database that maps domain names and IP addresses to each other. In this case, if an extended parameter of the PANI header is the network element identifier, the VoNR/VoLTE SBC-C needs to send an IP address resolution request to the DNS and receives a returned the IP address of the DC media plane network element.

Specifically, after the SBC-C adds the identification information of the DC media plane to the PANI header of the call request message, the method further includes: sending the call request message to a CSCF, so that the CSCF informs the SBC-C to establish a dedicated bearer and informs the SBC-C that the PANI header of the call request message is added with the identification information.

Exemplarily, the VoNR/VoLTE AS of the callee sends an INVITE message to the S-CSCF of the callee, and the S-CSCF of the callee routes the INVITE message to the VoNR/VoLTE SBC-C of the callee. The S-CSCF of the callee informs the VoNR/VoLTE SBC-C of the callee to establish a dedicated bearer, and informs the VoNR/VoLTE SBC-C of the callee that the PANI header in the INVITE message is added with the identification information. Therefore, after receiving the INVITE message, the VoNR/VoLTE SBC-C of the callee extracts the identification information from the PANI header.

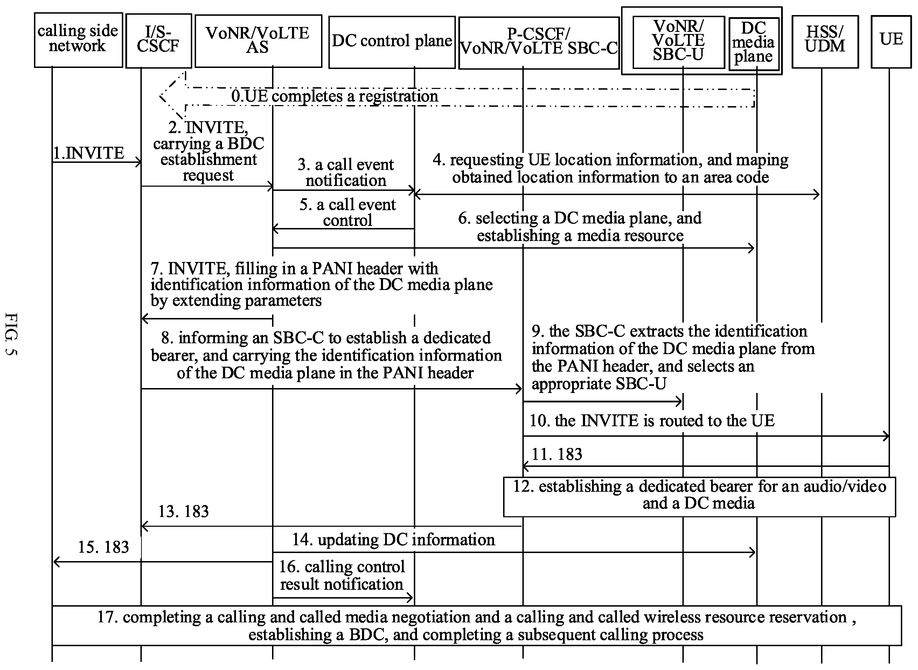

When the method for selecting a media plane of an IMS is applied to the above scenario ③, referring to FIG. 5. FIG. 5 is a flowchart of a called process between a UE and an IMS core network based on a DC service according to embodiments of the disclosure. The specific process is as follows.

Step 0 is the same as step 0 of the calling process in the above method for selecting a media plane of the IMS, and will not be repeated here.

Steps 1~6: The VoNR/VoLTE AS of the callee receives an INVITE message carrying a Bootstrap Data Channel (BDC) Session Description Protocol (SDP) Offer. A processing is similar to that on a caller side. The VoNR/VoLTE AS reports a call start event to a DC control plane network element of the callee, accepts a call event control, creates DC resources, constructs a new DC SDP Offer, and sends the INVITE message. After the DC control plane network element of the callee queries user location information from an HSS/UDM, the DC control plane network element maps it to an area code, and carries the area code in a call event control message to the VoNR/VoLTE AS for the VoNR/VoLTE AS to select the DC media plane based on the area code, location information, and the like.

Step 7: After selecting the DC media plane of the callee based on location information such as the area code, the VoNR/VoLTE AS of the callee, through the above four ways to extend parameters, fills in the PANI header of the INVITE message with the identification information of the DC media plane.

Steps 8~9: The S-CSCF of the callee routes the INVITE message to the VoNR/VoLTE SBC-C of the callee, the VoNR/VoLTE SBC-C of the callee extracts the identification information of the DC media plane from the PANI header, obtains the IP address of the DC media plane based on the identification information, indexes the IP address of the VoNR/VoLTE SBC-U according to the IP address of the DC media plane, and performs a selection of the VoNR/VoLTE SBC-U.

Steps 10~13: The VoNR/VoLTE SBC-C routes the INVITE message to a called UE (the callee), and the called UE sends 183 carrying an SDP Answer of the DC media plane. The VoNR/VoLTE SBC-C of the callee receives the 183 with the SDP Answer, executes a QoS process, establishes a dedicated bearer or a dedicated QoS flow of an audio/video and the DC media plane, and then forwards the 183 to a calling side.

Steps 14~16: The VoNR/VoLTE AS of the callee updates DC information of the called UE to the DC media plane of the callee, sends the 183 to the calling side, and reports a media negotiation result to the DC control plane network element. After the calling side receives the 183, the calling side completes a calling and called media negotiation and a calling and called wireless resource reservation according to an existing process mechanism, establishes a BDC, and completes a subsequent calling process.

In the embodiments of the disclosure, an association relationship between an IP address of a DC media plane and an IP address of an SBC-U is constructed in advance when a terminal is in a called process. After selecting one of media planes in an IMS core network, an IP address of the other media plane that is set in an integrated manner can be obtained according to a media plane selected first, so that the other corresponding media plane is selected based on the IP address. By selecting a DC media plane network element and an SBC-U network element which are an integrated network element with strong correlation during the call process of the user, a media stream forwarding is realized inside the integrated network element without selecting a media plane network element available in a POOL by polling a plurality of times, and a media stream can be processed nearby. After selecting the DC media plane, the VoNR/VoLTE SBC-U that is integrated with the DC media plane is directly obtained based on the association relationship, thereby reducing a media forwarding delay, improving data interaction efficiency, and improving user experience. In addition, an audio/video media stream that needs to be anchored can be terminated in an integrated network element, which can effectively reduce requirements of an IP bearer network and transmission resource, and does not occupy additional transmission bandwidth resources.

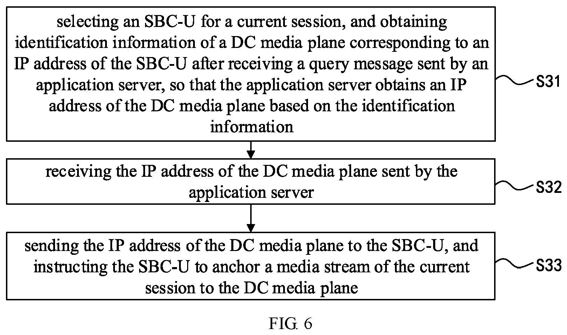

Referring to FIG. 6, FIG. 6 is a flowchart of a third method for selecting a media plane of an IMS according to embodiments of the disclosure. The method for selecting a media plane of the IMS is applied to the above scenario ① and scenario ②. The method for selecting a media plane of the IMS in the embodiment is different from the above two methods for selecting a media plane of the IMS in that the method of adding identification information of the DC media plane to the PANI header (active reporting method of the VoNR/VoLTE SBC-C) is not adopted, but a method that the VoNR/VoLTE AS actively initiates a query to obtain the identification information of the DC media plane is adopted in this embodiment. The method for selecting a media plane of the IMS includes: steps S31, S32, and S33.

At step S31, an SBC-U for a current session is selected, and identification information of a DC media plane corresponding to an IP address of the SBC-U is obtained after a query message sent by an application server is received, so that the application server obtains an IP address of the DC media plane based on the identification information.

At step S32, the IP address of the DC media plane sent by the application server is received.

At step S33, the IP address of the DC media plane is sent to the SBC-U, and the SBC-U is instructed to anchor a media stream of the current session to the DC media plane.

It should be noted that the method for selecting a media plane of the IMS in the embodiments of the disclosure is implemented by a VoNR/VoLTE SBC-C in the IMS core network. The identification information is the IP address of the DC media plane or a network element identifier, and the IP address of the DC media plane is associated with an IP address of the SBC-U in advance.

Exemplarily, at step S31, the VoNR/VoLTE SBC-C selects the VoNR/VoLTE SBC-U for the current session. After receiving a query message, the VoNR/VoLTE SBC-C obtains the identification information of the DC media plane that is integrated with the VoNR/VoLTE SBC-U of a current call. At step S32, the VoNR/VoLTE AS directly obtains the identification information of the DC media plane in the PANI header, obtains the IP address of the DC media plane according to the identification information, and sends an address of the selected DC media plane network element to the VoNR/VoLTE SBC-C. At step S33, the VoNR/VoLTE SBC-C sends an obtained address of the DC media plane network element to the selected VoNR/VoLTE SBC-U and instructs the VoNR/VoLTE SBC-U to anchor the media stream of the current call to the DC media plane network element.

Specifically, when the identification information is the network element identifier, the application server obtains the IP address of the DC media plane based on the identification information, including: sending, by the application server, an IP address resolution request to a DNS based on the network element identifier and receiving, by the application server, the IP address of the DC media plane returned by the DNS.

Exemplarily, the DNS is a core service of the Internet, including a parser and a domain name server. The DNS is a distributed database that maps domain names and IP addresses to each other. In this case, if an extended parameter of the PANI header is the network element identifier, the VoNR/VoLTE AS needs to send an IP address resolution request to the DNS and receives a returned IP address of the DC media plane network element.

Specifically, before the SBC-C receives a session invitation message sent by a terminal, the method further includes:
detecting, by the application server, that a terminal user has subscribed a new service, and obtaining and storing an IP address of the SBC-C; and
sending, by the application server, a query message to the SBC-C based on the IP address of the SBC-C.

Exemplarily, the VoNR/VoLTE AS determines based on subscriber subscription information, if a user subscribes a 5G new calling service, the IP address of the VoNR/VoLTE SBC-C is obtained via a message and is recorded for subsequent delivery of a query message. After receiving an INVITE request, the VoNR/VoLTE AS sends a query message to the VoNR/VoLTE SBC-C based on the address of the VoNR/VoLTE SBC-C, and informs the VoNR/VoLTE SBC-C to report the IP address or network element identifier of the DC media plane that is integrated with the VoNR/VoLTE SBC-U of the current call.

Specifically, after selecting the SBC-U for the current session, the method further includes: mapping user location information and filling in an sbc-domain field of a PANI header of a call request message with mapped location information, and sending the call request message to a CSCF, so that the CSCF triggers the application server based on user subscription information.

Exemplarily, the VoNR/VoLTE SBC-C maps user location information TAI and ECGI to a long-distance area code and an area identification code of an area where the user located, fills in an sbc-domain field of a PANI header of an SIP call request message with the long-distance area code and the area identification code. The SIP call request message is routed to an S-CSCF. The S-CSCF routes the call to the VoNR/VoLTE AS based on a SiFC of the user, and triggers an SCC AS and a TAS in order, and complete a service process and number regulation based on a voice service subscribed by the user.

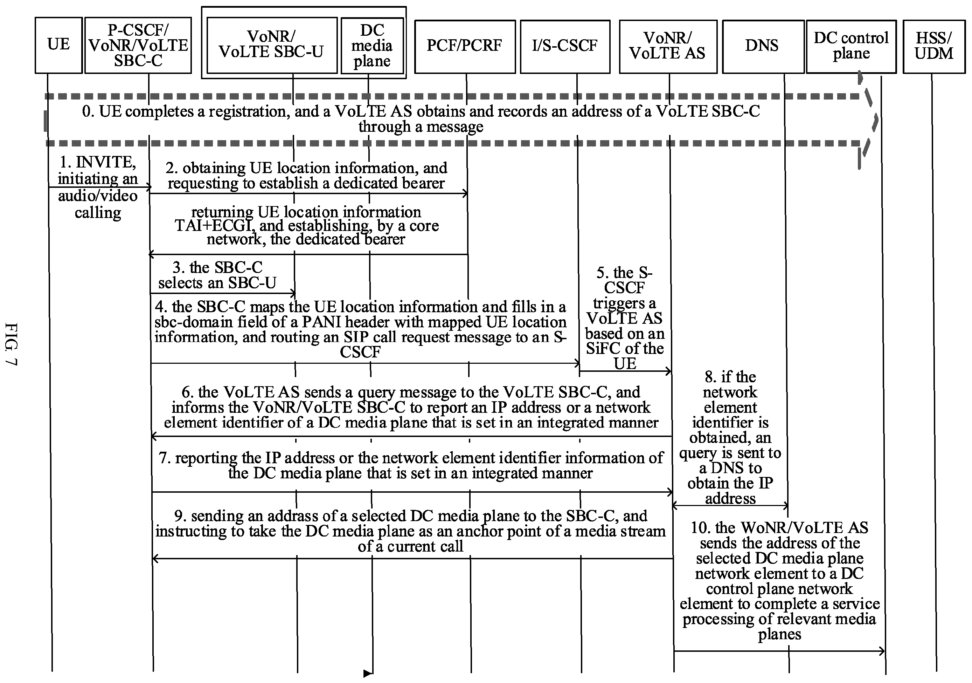

When the method for selecting a media plane of an IMS is applied to the above scenario ①, referring to FIG. 7. FIG. 7 is a flowchart of another calling process between a UE and an IMS core network according to embodiments of the disclosure. The calling process is as follows.

Step 0 can be referred to the Step 0 in the first method for selecting a media plane of the IMS, which will not be repeated here.

Step 1: The UE initiates an audio/video call, and an INVITE request is sent to a VoNR/VoLTE SBC-C. The INVITE request is used to invite a UE or a server to participate in a session.

Step 2: The VoNR/VoLTE SBC-C sends a message to a PCF/PCRF to request user location information and request to establish a dedicated PDU session/bearer for a voice service. The PCF/PCRF completes information interaction with a network element of a 4/5G core network, and returns current user location information TAI + ECGI to the VoNR/VoLTE SBC-C. The 4/5G core network establishes the dedicated PDU session/bearer for an audio/video service for a call.

Step 3: The VoNR/VoLTE SBC-C selects a VoNR/VoLTE SBC-U and saves device information (such as an IP address, a FQDN, and the like) of the VoNR/VoLTE SBC-U.

Step 4: The VoNR/VoLTE SBC-C maps the user location information TAI and ECGI to a long-distance area code and an area identification code of an area where the UE located, fills in an sbc-domain field of a PANI header of an SIP call request message with the long-distance area code and the area identification code, and routes the SIP call request message to an S-CSCF.

The sbc-domain=sbc(1..n).<long-distance area code>.<area identification code>.<abbreviation of a name of a province>.chinamobile.com, in which the sbc(1..n) is an identifier of SBC-C.

Step 5: The S-CSCF routes the call to the VoNR/VoLTE AS based on a SiFC of the UE, and triggers an SCC AS and a TAS in order, and completes a service process and number regulation based on the voice service subscribed by the UE.

Step 6: After receiving the INVITE request, the VoNR/VoLTE AS sends a query message to the VoNR/VoLTE SBC-C, and informs the VoNR/VoLTE SBC-C to report the IP address or network element identifier of the DC media plane that is integrated with the VoNR/VoLTE SBC-U of a current call.

Step 7: The VoNR/VoLTE SBC-C reports the IP address or the network element identifier of the DC media plane that is integrated with the VoNR/VoLTE SBC-U of the current call to the VoNR/VoLTE AS.

Step 8: The VoNR/VoLTE AS selects a DC media plane based on the IP address or the network element identifier of the DC media plane. If the network element identifier is obtained, an IP address resolution request is needed to be sent to the DNS, and receives a returned IP address of the DC media plane. If None (for example) is obtained, the VoNR/VoLTE SBC-U is not integrated with the DC media plane, and the VoNR/VoLTE AS performs a DNS query based on a correspondence between location information such as the area code in the sbc-domain and the DC media plane network element according to an original plan, and selects a DC media plane by polling.

Step 9: The VoNR/VoLTE AS sends an address of a selected DC media plane network element to the VoNR/VoLTE SBC-C. The VoNR/VoLTE SBC-C sends the address of an obtained DC media plane network element to the selected VoNR/VoLTE SBC-U, and instructs the VoNR/VoLTE SBC-U to anchor a media stream of the current call to the DC media plane network element. Then, the VoNR/VoLTE SBC-C returns the address of the VoNR/VoLTE SBC-U to the VoNR/VoLTE AS and the VoNR/VoLTE AS provides the relevant information such as the address of the VoNR/VoLTE SBC-U to the DC media plane network element for the DC media plane network element to establish an IP channel with the VoNR/VoLTE SBC-U.

Step 10: After the DC media plane is successfully anchored, the VoNR/VoLTE AS reports resources of the DC media plane to a DC control plane network element, and then the DC control plane network element directly operates the DC media plane to complete a service processing of relevant media planes.

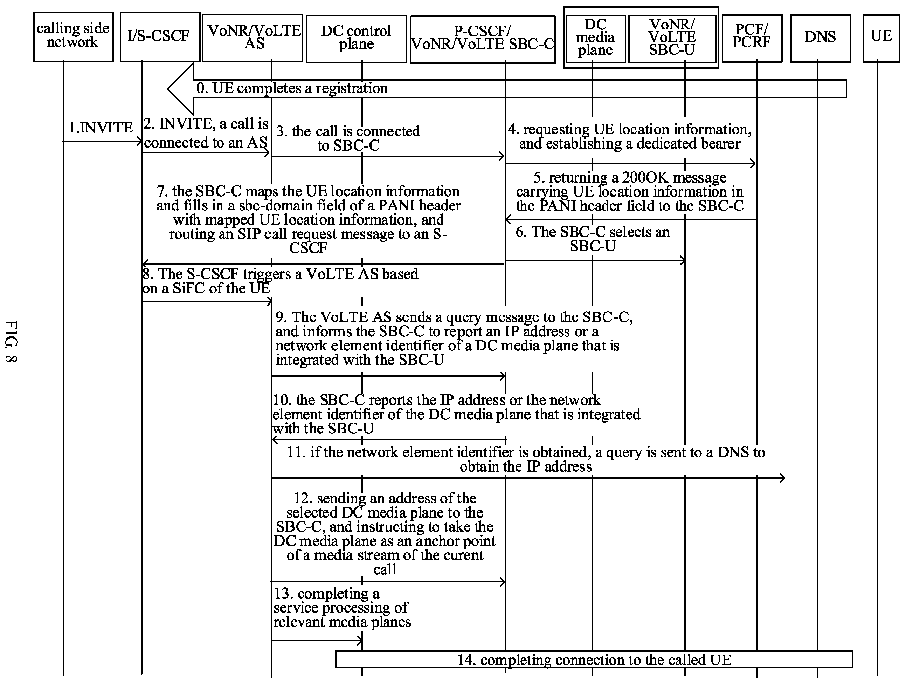

When the method for selecting a media plane of the IMS is applied to the above scenario ②, referring to FIG. 8. FIG. 8 is a flowchart of another called process between a UE and an IMS core network based on a video enhancement service according to embodiments of the disclosure. The called process based on a video enhancement service is as follows.

Step 0 is the same as the Step 0 in the calling process. A called UE registers both in a packet domain and an IMS domain.

Steps 1~3: A caller initiates an audio/video call, an S-CSCF of the caller connects a call to an I-CSCF of a home province of a callee, and the I-CSCF of the callee queries an HSS/UDM and connects the call to a VoNR/VoLTE AS through the S-CSCF currently registered by the callee, and the callee is connected through a VoNR/VoLTE SBC-C of the callee.

Steps 4~5: The VoNR/VoLTE SBC-C of the callee sends a message to a PCF/PCRF to request user location information and request to establish a dedicated PDU session/bearer for a voice service. The PCF/PCRF completes information interaction with a network element of a 4/5G core network, carries current user location information TAI + ECGI in a PANI header of a 200OK response message, and returns it to the VoNR/VoLTE SBC-C. The 4/5G core network establishes the dedicated PDU session/bearer for an audio/video service for the call.

Step 6: The VoNR/VoLTE SBC-C of the callee selects a VoNR/VoLTE SBC-U and saves device information (such as an IP address, a FQDN, and the like) of the VoNR/VoLTE SBC-U.

Step 7: The VoNR/VoLTE SBC-C of the callee maps the user location information TAI and ECGI to a long-distance area code and an area identification code of an area where a UE located, fills in an sbc-domain field of a PANI header of an SIP call request message with the long-distance area code and the area identification code, and then routes the SIP call request message to an S-CSCF of the callee.

Step 8: The S-CSCF of the callee routes the call to the VoNR/VoLTE AS of the callee based on the SiFC of the UE, and triggers an SCC AS and a TAS in order, and completes a service process and number regulation based on the voice service subscribed by the UE.

Step 9: After receiving the INVITE request, the VoNR/VoLTE AS of the callee sends a query message to the VoNR/VoLTE SBC-C of the callee, and informs the VoNR/VoLTE SBC-C of the callee to report an IP address or the network element identifier of the DC media plane that is integrated with the VoNR/VoLTE SBC-U of a current call.

Step 10: The VoNR/VoLTE SBC-C of the callee reports the IP address or the network element identifier of the DC media plane that is integrated with the VoNR/VoLTE SBC-U of the current call to the VoNR/VoLTE AS of the callee.

Step 11: The VoNR/VoLTE AS of the callee selects a DC media plane based on the IP address or the network element identifier of the DC media plane. If the network element identifier is obtained, an IP address resolution request is needed to be sent to the DNS, and receives a returned IP address of the DC media plane. If None (for example) is obtained, the VoNR/VoLTE SBC-U is not integrated with the DC media plane, and the VoNR/VoLTE AS performs a DNS query based on a correspondence between location information such as the area code in the sbc-domain and the DC media plane network element according to an original plan, and selects a DC media plane by polling.

Steps 12 to 13 refer to steps 9 to 10 of the calling process of the UE and IMS core network in the embodiments (FIG. 7), which will not be repeated here.

In the embodiments of the disclosure, an association relationship between an IP address of a DC media plane and an IP address of an SBC-U is constructed in advance when the terminal is in a calling process or a called process. After selecting one of media planes in an IMS core network, an IP address of the other media plane that is set in an integrated manner can be obtained according to a media plane selected first, so that the other corresponding media plane is selected based on the IP address. By selecting a DC media plane network element and an SBC-U network element which are an integrated network element with strong correlation during the call process of the user, a media stream forwarding is realized inside the integrated network element without selecting a media plane network element available in a POOL by polling a plurality of times, and a media stream can be processed nearby. After selecting a VoNR/VoLTE SBC-U, a DC media plane that is integrated with the VoNR/VoLTE SBC-U can be quickly obtained according to the association relationship, thereby reducing a media forwarding delay, improving data interaction efficiency, and improving user experience. In addition, an audio/video media stream that needs to be anchored can be terminated in the integrated network element, which can effectively reduce requirements of an IP bearer network and transmission resources, and does not occupy additional transmission bandwidth resources.

The embodiments of the disclosure further provide an IMS core network, including an SBC-C and an application server.

The SBC-C selects an SBC-U for a current session, and adds identification information of a DC media plane to a PANI header of a call request message, in which the identification information is the IP address of the DC media plane or a network element identifier of the DC media plane, and the IP address of the DC media plane is associated with the IP address of the SBC-U in advance.

The application server obtains the IP address of the DC media plane based on the identification information, and returns the IP address of the DC media plane to the SBC-C.

The SBC-C sends the IP address of the DC media plane to the SBC-U, and instructs the SBC-U to anchor a media stream of the current session to the DC media plane.

Specifically, adding the identification information of the DC media plane to the PANI header includes one of:
adding an extended parameter of the identification information of the DC media plane to the PANI header; or
adding the identification information of the DC media plane to a specific field of the PANI header.

Specifically, adding the extended parameter of the identification information of the DC media plane to the PANI header includes: adding an extended parameter of the network element identifier of the DC media plane and an extended parameter of a location identifier to the PANI header; or adding an extended parameter of the IP address of the DC media plane and an extended parameter of an IP address type to the PANI header.

Specifically, adding the identification information of the DC media plane to the specific field of the PANI header includes: adding the IP address of the DC media plane and an IP address type to the specific field of the PANI header; or adding the network element identifier of the DC media plane to the specific field of the PANI header.

Specifically, the specific field is an sbc-domain field.

Specifically, when the identification information is the network element identifier, the application server sends an IP address resolution request to a DNS based on the network element identifier and receives the IP address of the DC media plane returned by the DNS.

Specifically, the SBC-C instructs the SBC-U to anchor a media stream of the current session to the DC media plane, the DC media plane receives the IP address of the SBC-U and establishing an IP channel with the SBC-U.

Specifically, after the SBC-C adds the identification information of the DC media plane to the PANI header of the call request message, before the application server extracts the identification information from the call request message, the SBC-C sends the call request message to a CSCF and the CSCF triggers the application server based on user subscription information.

It should be noted that a working process of each module in the IMS core network in the embodiments of the disclosure can refer to a working process of the first method for selecting a media plane of the IMS in the above embodiments, which will not be repeated here.

In the embodiments of the disclosure, an association relationship between an IP address of a DC media plane and an IP address of an SBC-U is constructed in advance when the terminal is in a calling process or a called process. After selecting one of media planes in an IMS core network, an IP address of the other media plane that is set in an integrated manner can be obtained according to the media plane selected first, so that the other corresponding media plane is selected based on the IP address. By selecting a DC media plane network element and an SBC-U network element which are an integrated network element with strong correlation during the calling process of the user, a media stream forwarding is realized inside the integrated network element without selecting a media plane network element available in a POOL by polling a plurality of times, and a media stream can be processed nearby. After selecting a VoNR/VoLTE SBC-U, a DC media plane that is integrated with the VoNR/VoLTE SBC-U can be quickly obtained according to the association relationship, thereby reducing a media forwarding delay, improving data interaction efficiency, and improving user experience. In addition, an audio/video media stream that needs to be anchored can be terminated in the integrated network element, which can effectively reduce requirements of an IP bearer network and transmission resources, and does not occupy additional transmission bandwidth resources.

The embodiments of the disclosure further provide an IMS core network, including an SBC-C and an application server.

The application server selects a DC media plane for a current session, and adds identification information of the DC media plane to a PANI header of a call request message, in which the identification information is the IP address of the DC media plane or a network element identifier of the DC media plane, and the IP address of the DC media plane is associated with an IP address of an SBC-U in advance.

The SBC-C extracts the identification information from the call request message, and obtains the IP address of the DC media plane based on the identification information.

The SBC-C indexes to a corresponding IP address of the SBC-U according to the IP address of the DC media plane, and selects a corresponding SBC-U according to the IP address of the SBC-U.

Specifically, adding the identification information of the DC media plane to the PANI header includes one of:
adding an extended parameter of the identification information of the DC media plane to the PANI header; or
adding the identification information of the DC media plane to a specific field of the PANI header.

Specifically, adding the extended parameter of the identification information of the DC media plane to the PANI header includes: adding an extended parameter of the network element identifier of the DC media plane and an extended parameter of a location identifier to the PANI header; or adding an extended parameter of the IP address of the DC media plane and an extended parameter of an IP address type to the PANI header.

Specifically, adding the identification information of the DC media plane to the specific field of the PANI header includes: adding the IP address of the DC media plane and an IP address type to the specific field of the PANI header; or adding the network element identifier of the DC media plane to the specific field of the PANI header.

Specifically, the specific field is an sbc-domain field.

Specifically, when the identification information is the network element identifier, the SBC-C sends an IP address resolution request to a DNS based on the network element identifier and receives the IP address of the DC media plane returned by the DNS.

Specifically, the application server sends the call request message to a CSCF, and the CSCF informs the SBC-C to establish a dedicated bearer and informs the SBC-C that the PANI header of the call request message is added with the identification information.

It should be noted that for a working process of each module in the IMS core network in the embodiments of the disclosure, refer to a working process of the second method for selecting a media plane of the IMS in the above embodiments, which will not be repeated here.

In the embodiments of the disclosure, an association relationship between an IP address of a DC media plane and an IP address of an SBC-U is constructed in advance when the terminal is in a called process. After selecting one of media planes in an IMS core network, an IP address of the other media plane that is set in an integrated manner can be obtained according to the media plane selected first, so that the other corresponding media plane is selected based on the IP address. By selecting a DC media plane network element and an SBC-U network element which are an integrated network element with strong correlation during the calling process of the user, a media stream forwarding is realized inside the integrated network element without selecting a media plane network element available in a POOL by polling a plurality of times, and a media stream can be processed nearby. After selecting the DC media plane, the VoNR/VoLTE SBC-U that is integrated with the DC media plane is directly obtained based on the association relationship, thereby reducing a media forwarding delay, improving data interaction efficiency, and improving user experience. In addition, an audio/video media stream that needs to be anchored can be terminated in an integrated network element, which can effectively reduce requirements of an IP bearer network and transmission resources, and does not occupy additional transmission bandwidth resources.

The embodiments of the disclosure further provide an IMS core network, including an SBC-C and an application server.

The SBC-C selects an SBC-U for a current session, and obtains identification information of a DC media plane corresponding to an IP address of the SBC-U after receiving a call request message sent by the application server, in which the identification information is the IP address of the DC media plane or a network element identifier of the DC media plane, and the IP address of the DC media plane is associated with the IP address of the SBC-U in advance.

The application server obtains the IP address of the DC media plane based on the identification information, and returns the IP address of the DC media plane to the SBC-C.

The SBC-C sends the IP address of the DC media plane to the SBC-U, and instructs the SBC-U to anchor a media stream of the current session to the DC media plane.

Specifically, when the identification information is the network element identifier, the application server sends an IP address resolution request to a DNS based on the network element identifier and receives the IP address of the DC media plane returned by the DNS.

Specifically, before the SBC-C receives a session invitation message sent by the terminal, the application server detects that a terminal user has subscribed a new service, and obtains and stores an IP address of the SBC-C; or the application server sends a query message to the SBC-C based on the IP address of the SBC-C.

Specifically, after the SBC-C selects an SBC-U for the current session, before the application server sends a query message to the SBC-C, the SBC-C maps user location information and fills in an sbc-domain field of a PANI header of the call request message with mapped location information, and sends the call request message to a CSCF, and the CSCF triggers the application server based on user subscription information.

It should be noted that for a working process of each module in the IMS core network in the embodiments of the disclosure, refer to a working process of the third method for selecting a media plane of the IMS in the above embodiments, which will not be repeated here.

In the embodiments of the disclosure, an association relationship between an IP address of a DC media plane and an IP address of an SBC-U is constructed in advance when the terminal is in a calling process or a called process. After selecting one of media planes in an IMS core network, an IP address of the other media plane that is set in an integrated manner can be obtained according to the media plane selected first, so that the other corresponding media plane is selected based on the IP address. By selecting a DC media plane network element and an SBC-U network element which are an integrated network element with strong correlation during the calling process of the user, a media stream forwarding is realized inside the integrated network elements without selecting a media plane network element available in a POOL by polling a plurality of times, and a media stream can be processed nearby. After selecting a VoNR/VoLTE SBC-U, a DC media plane that is integrated with the VoNR/VoLTE SBC-U can be quickly obtained according to the association relationship, thereby reducing a media forwarding delay, improving data interaction efficiency, and improving user experience. In addition, an audio/video media stream that needs to be anchored can be terminated in the integrated network element, which can effectively reduce requirements of an IP bearer network and transmission resource, and does not occupy additional transmission bandwidth resources.

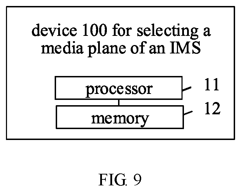

FIG. 9 is a block diagram of a device 100 for selecting a media plane of an IMS according to embodiments of the disclosure. The device 100 for selecting a media plane of the IMS includes a processor 11, a memory 12, and a computer program stored in the memory 12 and executable by the processor 11. When the computer program is executed by the processor 11, the steps of each method for selecting a media plane of the IMS in the embodiments are implemented, such as S11 to S13, S21, and S31 to S33.

Exemplarily, the computer program may be divided into one or more modules/units, and the one or more modules/units are stored in the memory 12 and executed by the processor 11 to complete the methods in the disclosure. The one or more modules/units can be a series of computer program instruction segments that can complete specific functions, in which the instruction segments are configured to describe an execution process of the computer program in the device 100 for selecting a media plane of the IMS.

The device 100 for selecting a media plane of the IMS may include, but is not limited to, the processor 11 and the memory 12. Those skilled in the art can understand that the schematic diagram is only an example of the device 100 for selecting a media plane of the IMS, and does not constitute a limitation on the device 100 for selecting a media plane of the IMS. The device 100 may include more or fewer components than those shown in the attached drawings, or combine certain components or different components. For example, the device 100 for selecting a media plane of the IMS can further include an input and output device, a network access device, a bus, and the like.

The processor 11 can be a Central Processing Unit (CPU), or other general-purpose processor, a Digital Signal Processor (DSP), an Application Specific Integrated Circuit (ASIC), a Field-Programmable Gate Array (FPGA), a Graphics Processing Unit (GPU) or other programmable logic device, a discrete gate or a transistor logic device, a discrete hardware component, and the like. The general-purpose processor can be a microprocessor or any conventional processor, and the like. The processor 11 is a control center of the device 100 for selecting a media plane of the IMS, and uses various interfaces and lines to connect various parts of the device 100 for selecting a media plane of the IMS.

The memory 12 can be used to store a computer program and/or a module. The processor 11 implements various functions of the device 100 for selecting a media plane of the IMS by running or executing the computer program and/or module stored in the memory 12 and calling data stored in the memory 12. The memory 12 mainly includes a program storage area and a data storage area. The program storage area can store an operating system, an application required for at least one function (such as a sound playback function, and an image playback function), and the like. The data storage area can store data (such as audio data, and a phone book) created according to use of a mobile phone, and the like. In addition, the memory 12 can include a high-speed random access memory, and can further include a non-volatile memory, such as a hard disk, a memory, a plug-in hard disk, a Smart Media Card (SMC), a Secure Digital (SD) card, a flash card, at least one disk storage device, a flash memory device, or other volatile solid-state storage device.

The module/unit integrated in the device 100 for selecting a media plane of the IMS is implemented in the form of a software functional unit and sold or used as an independent product, it can be stored in a computer-readable storage medium. Based on this understanding, all or part of processes of the methods in above embodiments can be implemented by the disclosure, and can further be completed by instructing a relevant hardware by a computer program. The computer program can be stored in a computer-readable storage medium. When the computer program is executed by the processor 11, the steps of the above method embodiments can be implemented. The computer program includes a computer program code, and the computer program code can be in the form of a source code, an object code, an executable file or some intermediate forms. The computer-readable medium can include: any entity or device that can carry a computer program code, a recording medium, a U disk, a mobile hard disk, a diskette, an optical disk, a computer memory, a Read-Only Memory (ROM), a Random Access Memory (RAM), an electric carrier signal, a telecommunication signal and a software distribution medium.

The above is a preferred implementation of the disclosure. It should be pointed out that for those skilled in the art, without departing from the principle of the disclosure, several improvements and modifications can be made, and these improvements and modifications are further regarded as the scope of protection of the disclosure.

## Claims

1. A method for selecting a media plane of an Internet Protocol (IP) Multimedia Subsystem (IMS), comprising:
selecting a Session Border Controller-User plane (SBC-U) for a current session, and adding identification information of a Data Channel (DC) media plane to a P-Access-Network-Info (PANI) header of a call request message, so that an application server obtains an IP address of the DC media plane based on the identification information, wherein the identification information is the IP address of the DC media plane or a network element identifier of the DC media plane, and the IP address of the DC media plane is associated with an IP address of the SBC-U in advance;
receiving the IP address of the DC media plane sent by the application server; and
sending the IP address of the DC media plane to the SBC-U, and instructing the SBC-U to anchor a media stream of the current session to the DC media plane.

2. The method of claim 1, wherein adding the identification information of the DC media plane to the PANI header comprises one of:
adding an extended parameter of the identification information of the DC media plane to the PANI header; or
adding the identification information of the DC media plane to a specific field of the PANI header.

3. The method of claim 2, wherein adding the extended parameter of the identification information of the DC media plane to the PANI header comprises:
adding an extended parameter of the network element identifier of the DC media plane and an extended parameter of a location identifier to the PANI header; or
adding an extended parameter of the IP address of the DC media plane and an extended parameter of an IP address type to the PANI header.

4. The method of claim 2, wherein adding the identification information of the DC media plane to the specific field of the PANI header comprises:
adding the IP address of the DC media plane and an IP address type to the specific field of the PANI header; or
adding the network element identifier of the DC media plane to the specific field of the PANI header.

5. The method of claim 2 or 4, wherein the specific field is an sbc-domain field.

6. The method of claim 1, wherein after adding the identification information of the DC media plane to the PANI header of the call request message, the method further comprises:
sending the call request message to a call session control function system (CSCF), so that the CSCF triggers the application server based on user subscription information.

7. A method for selecting a media plane of an Internet Protocol (IP) Multimedia Subsystem (IMS), comprising:
selecting a Data Channel (DC) media plane for a current session, adding identification information of the DC media plane to a P-Access-Network-Info (PANI) header of a call request message, so that a Session Border Controller-Control plane (SBC-C) extracts the identification information from the call request message, and obtains an IP address of the DC media plane based on the identification information;
wherein the identification information is the IP address of the DC media plane or a network element identifier of the DC media plane, and the IP address of the DC media plane is associated with an IP address of the SBC-U in advance, and the SBC-C selects a corresponding SBC-U according to the IP address of the DC media plane.

8. The method of claim 7, wherein adding the identification information of the DC media plane to the PANI header comprises one of:
adding an extended parameter of the identification information of the DC media plane to the PANI header; or
adding the identification information of the DC media plane to a specific field of the PANI header.

9. The method of claim 8, wherein adding the extended parameter of the identification information of the DC media plane to the PANI header comprises:
adding an extended parameter of the network element identifier of the DC media plane and an extended parameter of a location identifier to the PANI header; or
adding an extended parameter of the IP address of the DC media plane and an extended parameter of an IP address type to the PANI header.

10. The method of claim 8, wherein adding the identification information of the DC media plane to the specific field of the PANI header comprises:
adding the IP address of the DC media plane and an IP address type to the specific field of the PANI header; or
adding the network element identifier of the DC media plane to the specific field of the PANI header.

11. The method of claim 8 or 10, wherein the specific field is an sbc-domain field.

12. The method of claim 7, further comprising:
sending the call request message to a call session control function system (CSCF), so that the CSCF informs the SBC-C to establish a dedicated bearer and informs the SBC-C that the PANI header of the call request message is added with the identification information.

13. A method for selecting a media plane of an Internet Protocol (IP) Multimedia Subsystem (IMS), comprising:
selecting a Session Border Controller-User plane (SBC-U) for a current session, and obtaining identification information of a Data Channel (DC) media plane corresponding to an IP address of the SBC-U after receiving a query message sent by an application server, so that the application server obtains an IP address of the DC media plane based on the identification information, wherein the identification information is the IP address of the DC media plane or a network element identifier of the DC media plane, and the IP address of the DC media plane is associated with the IP address of the SBC-U in advance;
receiving the IP address of the DC media plane sent by the application server; and
sending the IP address of the DC media plane to the SBC-U, and instructing the SBC-U to anchor a media stream of the current session to the DC media plane.

14. The method of claim 13, wherein after selecting the SBC-U for the current session, the method further comprises:
mapping user location information and filling in an sbc-domain field of a P-Access-Network-Info (PANI) header of the call request message with mapped location information, and sending the call request message to a call session control function system (CSCF), so that the CSCF triggers the application server based on user subscription information.

15. An Internet Protocol (IP) Multimedia Subsystem (IMS) core network, comprising a Session Border Controller-Control plane (SBC-C) and an application server,
wherein the SBC-C selects a Session Border Controller-User plane (SBC-U) for a current session, and adds identification information of a Data Channel (DC) media plane to a P-Access-Network-Info (PANI) header of a call request message, wherein the identification information is an IP address of the DC media plane or a network element identifier of the DC media plane, and the IP address of the DC media plane is associated with the IP address of the SBC-U in advance;
wherein the application server obtains the IP address of the DC media plane based on the identification information, and returns the IP address to the SBC-C; and
wherein the SBC-C sends the IP address of the DC media plane to the SBC-U, and instructs the SBC-U to anchor a media stream of the current session to the DC media plane.

16. An Internet Protocol (IP) Multimedia Subsystem (IMS) core network, comprising a Session Border Controller-User plane (SBC-C) and an application server,
wherein the application server selects a Data Channel (DC) media plane for a current session, and adds identification information of the DC media plane to a P-Access-Network-Info (PANI) header of a call request message, wherein the identification information is an IP address of the DC media plane or a network element identifier of the DC media plane, and the IP address of the DC media plane is associated with an IP address of an SBC-U in advance;
wherein the SBC-C extracts the identification information from the call request message, and obtains the IP address of the DC media plane based on the identification information; and
wherein the SBC-C indexes to a corresponding IP address of the SBC-U according to the IP address of the DC media plane, and selects a corresponding SBC-U according to the IP address of the SBC-U.

17. An Internet Protocol (IP,) Multimedia Subsystem, (IMS,) core network, comprising a Session Border Controller-Control plane, (SBC-C) and an application server,
wherein the SBC-C selects a Session Border Controller-User plane, (SBC-U) for a current session, and obtains identification information of a Data Channel, (DC) media plane corresponding to an IP address of the SBC-U after receiving a query message sent by an application server, wherein the identification information is an IP address of the DC media plane or a network element identifier of the DC media plane, and the IP address of the DC media plane is associated with the IP address of the SBC-U in advance;
wherein the application server obtains the IP address of the DC media plane based on the identification information, and returns the IP address of the DC media plane to the SBC-C; and
wherein the SBC-C sends the IP address of the DC media plane to the SBC-U, and instructs the SBC-U to anchor a media stream of the current session to the DC media plane.

18. A device for selecting a media plane of an Internet Protocol (IP) Multimedia Subsystem (IMS), comprising a processor, a memory and a computer program stored in the memory and executed by the processor, wherein when the computer program is executed by the processor, the method for selecting a media plane of the IMS according to any one of claims 1 to 14 is implemented.

19. A computer-readable storage medium comprising a stored computer program, wherein when the computer program is running, a device where the computer-readable storage medium is located implements the method for selecting a media plane of the Internet Protocol (IP) Multimedia Subsystem (IMS) according to any one of claims 1 to 14.
